# EUROPÄISCHE PATENTANMELDUNG

(11) **EP 3 915 380 A1**
(43) Veröffentlichungstag der Anmeldung: **01.12.2021**
(21) Anmeldenummer: 20177227.4
(22) Anmeldetag: 28.05.2020
(51) Int. Cl.: A21C 11/02

(54) **VORRICHTUNG UND VERFAHREN ZUM AUFBEREITEN EINER ROHTEIGWARE**

(71) Anmelder: Leeo Tech AG, 8804 Au ZH (CH)
(72) Erfinder: BÜHLER, Leo, 8820 Wädenswil (CH)
(74) Vertreter: Patentbüro Paul Rosenich AG

(57) **Zusammenfassung**

Die Erfindung umfasst eine Vorrichtung 10 zum Aufbereiten einer Rohteigware eine Fördereinrichtung 40 mit einem Fördermittel 45 zum Fördern der Rohteigware entlang einer Förderstrecke 46 in Richtung zu einer Backeinrichtung 50, einen Zugmitteltrieb 20 mit einer ersten Formeinheit 25a zum Verformen der Rohteigware, wobei der Zugmitteltrieb 20 beabstandet von der Fördereinrichtung 40 und benachbart zu der Fördereinrichtung 40 angeordnet ist. Der Zugmitteltrieb 20 weist eine Antriebseinrichtung 35 zum Antreiben der ersten Formeinheit 25a entlang einer geschlossenen Zugmittelbahn 22 auf und die erste Formeinheit 25a weist zumindest eine Verformungsmatrix 26 mit mehreren Verformungswerkzeugen 28a auf, wobei die zumindest eine Verformungsmatrix 26 bereichsweise entlang der Förderstrecke 46 der Fördereinrichtung 40 bewegbar ist Weiters umfasst die Erfindung ein Verfahren zum Aufbereiten einer Rohteigware.

## Beschreibung

Die Erfindung betrifft eine Vorrichtung zum Aufbereiten einer Rohteigware nach Anspruch 1 und ein Verfahren zum Aufbereiten einer Rohteigware nach Anspruch 11.

In der Industrie sind diverse Vorrichtungen zum Aufbereiten von Rohteigwaren bekannt. Dabei wird die Rohteigware mithilfe diverser Grundzutaten zubereitet und typischerweise in einer weiteren Vorrichtung zu einer flächigen Rohteigware geformt, bevor die flächige Rohteigware in einer Backeinrichtung gebacken wird. Je nach Anwendung kann, vor der Backeinrichtung eine Aufbereitungsvorrichtung angeordnet sein, um die flächige Rohteigware vor dem Backen zu portionieren, formen bzw. weiter aufzubereiten.

Die EP 0 105 582 A1 offenbart eine Prägevorrichtung zum Brägen einer Teigfläche mit einer Walze, die mehrere erhabenen Prägeelemente aufweist. Die mehreren erhabenen Prägeelemente pressen ein Gittermuster in die Teigware, wenn sich die Walze um deren Achse dreht und somit die mehreren erhabenen Prägeelemente in die flächige Teigware einführt. Eine gattungsähnliche Vorrichtung wird auch in der US 2007/065528 A1 oder in der EP 2 931 062 A1 offenbart.

Nachteilig an diesen bekannten Lösungen ist, dass eine Walze vorhanden ist, an welcher die mehreren erhabenen Elemente angeordnet sind, wobei diese erhabenen Elemente im Aufbereitungsprozess im Umfang der Walze in die flächige Teigware eindringen und deshalb beim Austreten aus der Teigware stark verschmutzen.

Aufgabe der vorliegenden Erfindung ist es somit, die Nachteile des Standes der Technik zumindest teilweise zu beheben und insbesondere eine Vorrichtung zum Aufbereiten einer Rohteigware zu schaffen, mit welcher die Oberfläche der Rohteigware vergrössert und die Prozessgeschwindigkeit erhöht wird, um eine nachfolgende Backzeitdauer in einer Backeinrichtung zu verkürzen. Weiters wird ein Verfahren zum Aufbereiten einer Rohteigware geschaffen, mit welchem die Prozessgeschwindigkeit erhöht wird und die anschliessend folgende Backzeitdauer in einer Backeinrichtung minimiert wird.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss der Erfindung umfasst eine Vorrichtung zum Aufbereiten einer Rohteigware eine Fördereinrichtung mit einem Fördermittel zum Fördern der Rohteigware entlang einer Förderstrecke in Richtung zu einer Backeinrichtung und einen Zugmitteltrieb mit einer ersten Formeinheit zum Verformen der Rohteigware, wobei der Zugmitteltrieb beabstandet von der Fördereinrichtung und benachbart zu der Fördereinrichtung angeordnet ist. Der Zugmitteltrieb weist eine Antriebseinrichtung zum Antreiben der ersten Formeinheit entlang einer geschlossenen Zugmittelbahn auf, die erste Formeinheit weist zumindest eine Verformungsmatrix mit mehreren Verformungswerkzeugen auf, wobei die zumindest eine Verformungsmatrix bereichsweise entlang der Förderstrecke der Fördereinrichtung bewegbar ist.

Bei einer derartigen Vorrichtung wird die Rohteigware typischerweise auf einem Förderband als Fördermittel entlang einer Förderstrecke bewegt. Die Fördereinrichtung weist dabei eine Förderrichtung auf, welche sich entlang der Förderstrecke in Richtung zu einer Backeinrichtung ausbildet. Die Rohteigware kann beispielsweise als flache und längliche Endlos-Rohteigware am Förderband angeordnet sein. Die Rohteigware wird entlang der Förderstrecke mit den mehreren Verformungswerkzeugen abschnittsweise in Kontakt gebracht und bildet in diesem Bereich eine Kontaktstrecke aus. Entlang der Kontaktstrecke dringen die mehreren Verformungswerkzeuge bereichsweise in die Rohteigware ein, sodass die Oberfläche der Rohteigware vergrössert wird. Eine vergrösserte Oberfläche in der Rohteigware ermöglicht eine kürzere Backzeitdauer in der nachfolgend angeordneten Backeinrichtung, da der Feuchtigkeitsgehalt in der Rohteigware beim Backen schneller reduzierbar ist.

Eine Verformungsmatrix ermöglicht ein regelmässiges aber auch ein individuelles Anordnen der mehreren Verformungswerkzeuge an der ersten Formeinheit. Je nach Rohteigware kann eine eigene Formeinheit oder unterschiedliche Formeinheiten mit individuellen Verformungswerkzeuge an den Zugmitteltrieb angeordnet werden, sodass die Abdrücke in der Rohteigware beliebig frei gestaltbar sind und somit die Grösse der Oberfläche der Rohteigware einstellbar ist.

Die Antriebseinrichtung kann zumindest eine Antriebswelle mit einem Antriebsmotor aufweisen, um den Zugmitteltrieb auf der geschlossenen Zugmittelbahn in eine Zugbahnrichtung anzutreiben.

Vorzugsweise ist der Zugmitteltrieb ein Kettenantrieb oder ein Riemenantrieb. Ein derartiger Zugmitteltrieb ist einfach aufgebaut und ermöglicht ein kontinuierliches Bewegen der mehreren Verformungswerkzeuge entlang der Kontaktstrecke. Ruckartige Bewegungen der mehreren Verformungswerkzeuge entlang der geschlossenen Zugmittelbahn sind verhinderbar, sodass das Verharren in die Rohteigware zu keinen unerwünschten Verformungen der Rohteigware führt.

Bevorzugt sind die mehreren Verformungswerkzeuge und das Fördermittel linear mit identischen Geschwindigkeiten bewegbar. Damit wird eine Relativbewegung der mehreren Verformungswerkzeuge und der Rohteigware zumindest im Bereich der Kontaktstrecke verhindert, sodass die Abdrücke in der Rohteigware reproduzierbare Formen aufweisen können. Des Weiteren kann damit eine schnellere Prozesszeit erreicht werden, sodass eine grössere Menge an Rohteigware aufbereitet werden kann.

Bevorzugterweise bildet der Zugmitteltrieb die geschlossene Zugmittelbahn. Die erste Formeinheit kann sich endlos entlang der geschlossenen Zugmittelbahn bewegen und die Rohteigware wiederkehrend aufbereiten. An der zumindest eine Antriebswelle der Antriebseinrichtung ist ein Antriebsmittel angeordnet, das in den Zugmitteltrieb eingreift und eine Zugmittelkette oder einen Zugmittelriemen entlang der geschlossenen Zugmittelbahn bewegt.

Vorteilhaft weist diese Zugmittelbahn zumindest eine erste Bahnsteigung und eine zweite Bahnsteigung auf, in denen die mehreren Verformungswerkzeuge der zumindest einen Verformungsmatrix jeweils zum Fördermittel ausgerichtet sind. Dabei ist zumindest die erste Formeinheit mit den mehreren Verformungswerkzeuge in der zweiten Bahnsteigung derart ausgerichtet, dass diese parallel zum Fördermittel ausgerichtet ist, sodass die mehreren Verformungswerkzeuge zumindest bereichsweise in der Rohteigware verweilen. Damit werden die Abdrücke in der Rohteigware ausgebildet, sodass die Oberfläche der Rohteigware einfach vergrössert wird.

Bevorzugt ist die erste Formeinheit zumindest zeitweise entlang der ersten Bahnsteigung bewegbar, um die mehreren Verformungswerkzeuge in die Rohteigware mit einem Eindringwinkel einzuführen. Die erste Bahnsteigung der Zugmittelbahn ist unterschiedlich zur zweiten Bahnsteigung der Zugmittelbahn. Die erste Formeinheit mit den mehreren Verformungswerkzeugen ist dabei zum Fördermittel ausgerichtet, wobei die mehreren Verformungswerkzeuge beim Bewegen entlang der ersten Bahnsteigung weitgehend vom Fördermittel sowie von der Rohteigware beabstandet sind und erst am Ende der ersten Bahnsteigung in die Rohteigware eindringen. Der Eindringwinkel ist jener Winkel, welcher sich zwischen der Senkrechten zur Förderrichtung des Fördermittels und der Richtung der ersten Bahnsteigung ausbildet. Dadurch können die mehreren Verformungswerkzeuge im Wesentlichen senkrecht in die Rohteigware eindringen, ohne diese beim Eindringen zu verschmieren. Unerwünschte Verformungen der Abdrücke in der Rohteigware werden damit unterbunden.

Vorteilhaft ist der Eindringwinkel einstellbar und liegt insbesondere zwischen 80° und 100°. Damit kann der Eindringwinkel beispielsweise abhängig von der Dicke der Rohteigware eingestellt werden, um unerwünschte Verformungen der Abdrücke in der Rohteigware beim Eindringen zu verhindern. Vorteilhaft beträgt der Eindringwinkel 90°, sodass keine unerwünschten Verformungen der Abdrücke in der Rohteigware entstehen können.

Vorzugsweise ist die erste Formeinheit zumindest zeitweise entlang der zweiten Bahnsteigung bewegbar, um in der Rohteigware entlang der Förderstrecke der Fördereinrichtung zu verweilen. Die mehreren Verformungswerkzeuge der Verformungsmatrix verweilen dabei bereichsweise entlang der Kontaktstrecke in der Rohteigware, sodass die Kontaktzeit zwischen den mehreren Verformungswerkzeugen und der Rohteigware möglichst lange ist. Am Ende der Kontaktstrecke werden die mehreren Verformungswerkzeuge von der Rohteigware entfernt und hinterlassen je nach Formgestaltung des Verformungswerkzeugs mehrere Abdrücke in der Rohteigware. Je länger die mehreren Verformungswerkzeuge in der Rohteigware verweilen, desto formstabiler sind die Abdrücke in der Rohteigware. Ein Rückverformen der elastischen Rohteigware kann zumindest verzögert werden, sodass die Rohteigware mit den Abdrücken formstabiler in die Backeinrichtung förderbar ist.

Bevorzugterweise weist die Zugmittelbahn eine weitere Bahnsteigung auf, in der die mehreren Verformungswerkzeuge der zumindest einen Verformungsmatrix zum Fördermittel ausgerichtet ist, wobei die erste Formeinheit zumindest zeitweise entlang der weiteren Bahnsteigung bewegbar sind, um die mehreren Verformungswerkzeuge aus der Rohteigware in einem Austrittswinkel zu lösen. Die erste Bahnsteigung der Zugmittelbahn ist unterschiedliche zur zweiten Bahnsteigung der Zugmittelbahn. Die erste Formeinheit mit den mehreren Verformungswerkzeugen ist dabei zum Fördermittel ausgerichtet, wobei die mehreren Verformungswerkzeuge beim Bewegen entlang der weiteren Bahnsteigung weitgehend vom Fördermittel sowie von der Rohteigware beabstandet sind und am Anfang der weiteren Bahnsteigung aus der Rohteigware ausdringen. Der Austrittswinkel ist jener Winkel, welcher sich zwischen der Senkrechten zur Förderrichtung des Fördermittels und der Richtung der weiteren Bahnsteigung ausbildet. Dadurch können die mehreren Verformungswerkzeuge im Wesentlichen senkrecht aus der Rohteigware ausdringen und sich davon lösen, ohne diese beim Ausdringen zu verschmieren. Unerwünschte Verformungen der Abdrücke in der Rohteigware werden damit unterbunden.

Vorteilhaft ist der Austrittswinkel einstellbar und liegt insbesondere zwischen 80° und 100°. Damit kann der Austrittswinkel beispielsweise an die Dicke der Rohteigware eingestellt werden, um unerwünschte Verformungen der Abdrücke in der Rohteigware beim Ausdringen bzw. Lösen von der Rohteigware zu verhindern. Vorteilhaft beträgt der Austrittswinkel 90°, sodass keine unerwünschten Verformungen der Abdrücke beim Lösen von der Rohteigware entstehen können.

Vorzugsweise sind die mehreren Verformungswerkzeuge entlang einer ersten Linie und entlang einer zweiten Linie an der zumindest einen Verformungsmatrix angeordnet, wobei die erste Linie und die zweite Linie senkrecht aufeinander stehen. Damit wird zumindest eine 2-dimensonales Verformungsmatrix mit den mehreren Verformungswerkzeugen geschaffen, sodass die Abdrücke in der Rohteigware grossflächig ausgebildet werden. Damit wird die Prozesszeit beim Aufbereiten einer Rohteigware wesentlich verkürzt.

Bevorzugterweise weisen die mehreren Verformungswerkzeuge jeweils zumindest eine Noppe zum abschnittsweisen Eindringen in die Rohteigware auf. Eine Noppe besteht hier vorliegend im Wesentlichen aus einem stiftförmigen Grundkörper, welcher an einem ersten Ende einen Befestigungsabschnitt zum Befestigen des zumindest einen Noppens an der Verformungsmatrix umfasst. An einem weiteren Ende des Noppens weist dieser eine Verformungsabschnitt zum zumindest bereichsweisen Eindringen in die Rohteigware auf. Damit können die mehreren Verformungswerkzeuge einfach in die Rohteigware eindringen und ausdringen, ohne dass ein Rohteigrest an den Verformungswerkzeugen haftet. Ein mit einem Rohteigrest verunreinigter Noppen würde eine unerwünschte Verformung der Abdrücke in der Rohteigware hervorrufen. Vorteilhaft ist der Verformungsabschnitt des zumindest einen Noppens halbkugelförmig ausgebildet, sodass das Haften von Rohteigrest am Noppen verhinderbar ist.

Alternativ oder ergänzend weisen die mehreren Verformungswerkzeuge jeweils zumindest eine Schneidkante zum vollständigen Eindringen in die Rohteigware auf. Die Schneidkante kann dabei als Trennwerkzeug dienen, um zumindest einen Rohteigwarenteil von der übrigen Rohteigware zu trennen und einfach zu separieren. Vorteilhaft ist die zumindest eine Schneidkante am Verformungsabschnitt des zumindest einen Noppens angeordnet.

Vorzugsweise weisen die mehreren Verformungswerkzeuge eine Beschichtung auf, um die Haftreibung zur Rohteigware zu senken. Damit kann eine Haftung von Rohteigresten weiter verhindert werden. Vorteilhaft umfasst die Beschichtung Teflon, sodass beispielsweise beim Ausdringen der mehreren Verformungswerkzeuge weder ein Rohteigrest noch Mehlrückstände an den mehreren Verformungswerkzeugen als Rückstände haften. Neben Teflon sind weitere Beschichtungsmaterialien einsetzbar, welche die Haftreibung von Rohteigwaren und/oder Mehl an den mehreren Verformungswerkzeugen senken.

Bevorzugterweise weist die erste Formeinheit mehrere Verformungsmatrizen auf. Die mehreren Verformungsmatrizen können an der ersten Formeinheit normal zur Förderrichtung des Fördermittels aneinandergereiht werden und einfach einzeln ausgetauscht werden. Dabei können die mehreren Verformungsmatrizen entlang der Längsausstreckung der jeweiligen Formeinheit nebeneinander angeordnet sein. Die Wartungsarbeiten, wie beispielsweise das Austauschen einzelner Verformungsmatrizen, wird dadurch vereinfacht.

Bevorzugt weist der Zugmitteltrieb zumindest eine zweite Formeinheit auf, wobei die erste Formeinheit von der zweiten Formeinheit beabstandet ist. Die zweite Formeinheit kann wie die erste Formeinheit ausgebildet sein, wie zuvor beschrieben. Damit kann die erste Formeinheit bzw. die ersten Verformungsmatrizen derart dimensioniert werden, dass die mehreren Verformungswerkzeuge der Verformungsmatrizen quasi gleichzeitig in die Rohteigware eindringen bzw. ausdringen. Zeitversetzt dazu dringen die Verformungsmatrizen der zweiten Formeinheit danach in die Rohteigware ein bzw. aus. Dadurch können mehrere Abdrücke in der Rohteigware ausgebildet werden, ohne dass diese mehreren Abdrücke verschmieren. Die mehreren Formeinheit sind einzeln beweglich am Zugmitteltrieb angeordnet und beweglich gelagert, sodass diese zeitversetzt nacheinander mit dem zuvor beschriebenen Eintrittswinkel in die Rohteigware eindringen können bzw. sich mit dem zuvor beschriebenen Austrittswinkel von der Rohteigware lösen. Damit wird das Ausbilden einer Oberfläche mit regelmässigen und flächendeckenden Abdrücken ermöglicht, welche formstabil und reproduzierbar in der Rohteigware verweilen.

Vorteilhaft kann die zweite Formeinheit unterschiedlich zur ersten Formeinheit ausgebildet sein. Beispielsweise weist die erste Formeinheit mehrere Verformungswerkzeuge mit Noppen auf, wie zuvor beschrieben, und die zweite Formeinheit weist mehrere Verformungswerkzeuge mit zumindest einer Schneidkante auf. Damit lässt sich die Rohteigware zusätzlich zum Verformen auch portionieren.

Vorteilhaft weist die Vorrichtung eine Reinigungseinrichtung auf, mit welcher zumindest die mehreren Verformungswerkzeuge reinigbar sind. Damit sind die mehreren Verformungswerkzeuge beispielsweise von Mehlrückständen einfacher reinigbar. Als Reinigungseinrichtung kann eine drehbare Reinigungsbürste verwendet werden. Vorteilhaft ist der Zugmitteltrieb zwischen der Reinigungseinrichtung und der Fördereinrichtung angeordnet, sodass die mehreren Verformungswerkzeuge reinigbar sind, wenn die mehreren Verformungswerkzeuge vom Fördermittel der Fördereinrichtung weg und hin zur Reinigungseinrichtung ausgerichtet sind. Beispielsweise können die Mehlrückstände in einer Auffangwanne der Reinigungseinrichtung gesammelt werden, sodass keine Mehlrückstände mit der Rohteigware in Berührung kommen.

Gemäss der Erfindung umfasst das Verfahren zum Aufbereiten einer Rohteigware zumindest die Verfahrensschritte:
a) Fördern des Fördermittels einer Fördereinrichtung entlang einer Förderstrecke;
b) Antreiben zumindest einer ersten Formeinheit mit einer Verformungsmatrix mit mehreren Verformungswerkzeuge entlang einer geschlossenen Zugmittelbahn mit zumindest zwei Bahnsteigungen, in der die mehreren Verformungswerkzeuge der zumindest einen Verformungsmatrix zum Fördermittel ausgerichtet ist;
c) Zumindest abschnittsweises Eindringen der mehreren Verformungswerkzeuge in eine Rohteigware, wobei das abschnittsweise Eindringen in die Rohteigware entlang einer ersten Bahnsteigung der geschlossenen Zugmittelbahn erfolgt;
d) Bewegen der mehreren Verformungswerkzeuge entlang eines ersten Bereiches der Förderstrecke der Fördereinrichtung mit einer zweiten Bahnsteigung, wobei die Geschwindigkeit der mehreren Verformungswerkzeuge identisch mit der Fördergeschwindigkeit des Fördermittels ist.

Mit einem derartigen Verfahren wird die Rohteigware typischerweise auf einem Förderband als Fördermittel entlang einer Förderstrecke bewegt. Die Rohteigware kann beispielsweise als flache und längliche Endlos-Rohteigware am Förderband angeordnet sein. Die Rohteigware wird entlang der Förderstrecke mit den mehreren Verformungswerkzeugen abschnittsweise in Kontakt gebracht und bildet in diesem Bereich eine Kontaktstrecke aus. Entlang der Kontaktstrecke dringen die mehreren Verformungswerkzeuge in die Rohteigware ein, sodass die Oberfläche der Rohteigware bereichsweise vergrössert wird. Eine vergrösserte Oberfläche in der Rohteigware ermöglicht eine kürzere Backzeitdauer in der nachfolgend angeordneten Backeinrichtung, da der Wassergehalt in der Rohteigware beim Backen schneller reduzierbar ist. Insbesondere wird das hier vorliegend beschriebenen Verfahren mit der hier vorliegend beschriebenen Vorrichtung ausgeführt.

Vorzugsweise werden die mehreren Verformungswerkzeuge der zumindest einen Verformungsmatrix nach dem Schritt d) von der Rohteigware gelöst, wobei die mehreren Verformungswerkzeuge entlang einer weiteren Bahnsteigung bewegt werden. Dadurch können die mehreren Verformungswerkzeuge im Wesentlichen senkrecht aus die Rohteigware ausdringen und sich davon lösen, ohne diese beim Ausdringen zu verschmieren. Unerwünschte Verformungen der Abdrücke in der Rohteigware werden damit unterbunden.

Bevorzugterweise dringen nach dem Schritt c) weitere mehrere Verformungswerkzeuge einer weiteren Verformungsmatrix einer zweiten Formeinheit zumindest abschnittsweises in die Rohteigware ein, wobei das abschnittsweise Eindringen in die Rohteigware entlang der ersten Bahnsteigung der geschlossenen Zugmittelbahn erfolgt. Damit kann die erste Formeinheit bzw. die erste Verformungsmatrix derart dimensioniert werden, dass die mehreren Verformungswerkzeuge einer Verformungsmatrix quasi gleichzeitig in die Rohteigware eindringen bzw. ausdringen. Zeitversetzt dazu dringt die Verformungsmatrix der zweiten Formeinheit danach in die Rohteigware ein bzw. aus. Dadurch können mehrere Abdrücke in der Rohteigware ausgebildet werden, ohne dass diese mehreren Abdrücke verschmieren.

Vorzugsweiser werden die mehreren Verformungswerkzeuge mit einer Reinigungseinrichtung gereinigt. Damit dringen nur saubere Verformungswerkzeuge in die Rohteigware ein, sodass die vorher beschriebenen Abdrücke in der Rohteigware nicht verschmiert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

### Es zeigen dabei:

- Fig. 1: eine erste Ausführungsform einer erfindungsgemässen Vorrichtung zum Aufbereiten einer Rohteigware in einer Vorderansicht,
- Fig. 2: die Vorrichtung gemäss Fig.1 in einer Schnittansicht in Richtung C-C,
- Fig. 3: ein Zugmitteltrieb mit mehreren Formeinheiten der Vorrichtung gemäss Fig.1 in einer Seitenansicht,
- Fig. 4: eine Verformungsmatrix mit mehreren Verformungswerkzeugen der Vorrichtung gemäss Fig.1 in einer perspektivischen Ansicht,
- Fig. 5: die Verformungsmatrix gemäss Fig.4 in einer Aufsicht,
- Fig. 6: die Verformungsmatrix gemäss Fig.4 in einer Seitenansicht,
- Fig. 7: ein Verformungswerkzeug der Verformungsmatrix gemäss Fig.4 in einer Seitenansicht, und
- Fig. 8: ein weiteres Verformungswerkzeug für eine Verformungsmatrix in einer Seitenansicht.

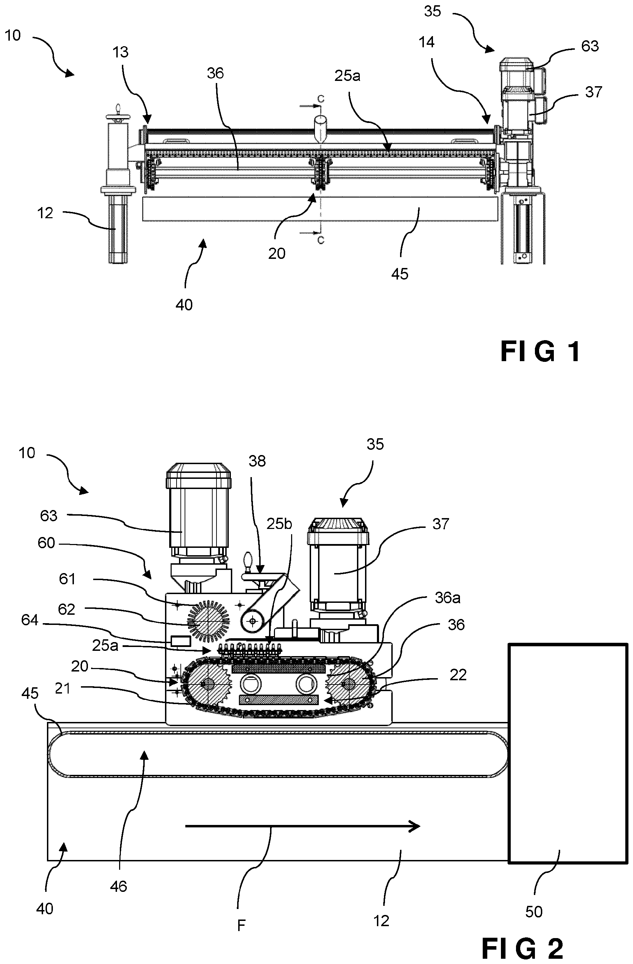

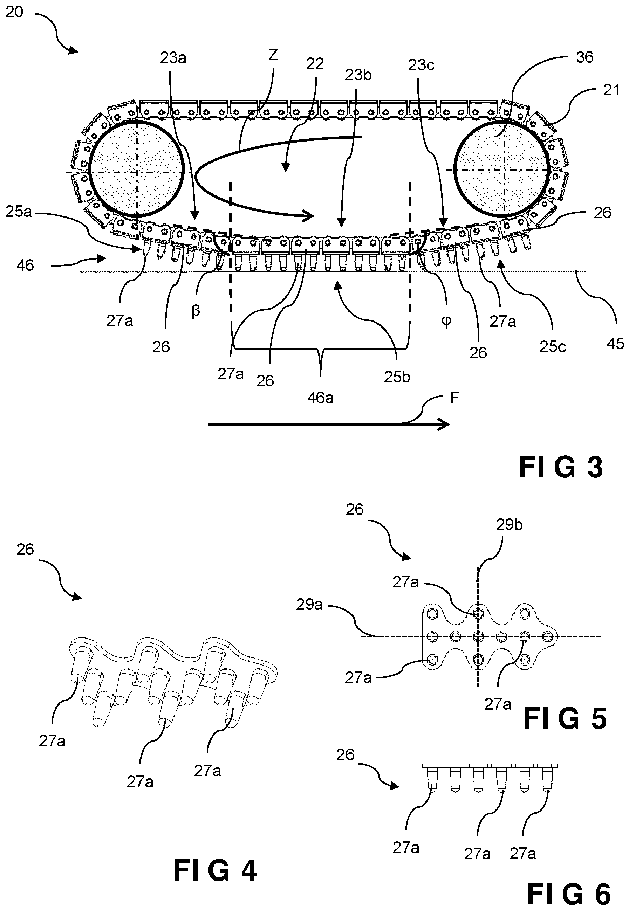

Die Fig. 1 bis 3 zeigen die Vorrichtung 10 zum Aufbereiten einer Rohteigware, welche im Wesentlichen aus einer Fördereinrichtung 40 mit einem Fördermittel 45 zum Fördern der Rohteigware entlang einer Förderstrecke 46 in Förderrichtung F zu einer Backeinrichtung 50 umfasst. Die Vorrichtung 10 weist einen Zugmitteltrieb 20 mit einer ersten Formeinheit 25a zum Verformen der Rohteigware auf, wobei der Zugmitteltrieb 20 beabstandet von der Fördereinrichtung 40 und benachbart zu der Fördereinrichtung 40 angeordnet ist. Die Vorrichtung weist eine Basisstruktur 12 auf, an welcher zumindest der Zugmitteltrieb 20 angeordnet ist sowie eine Antriebseinrichtung 35 zum Antreiben der ersten Formeinheit 25a entlang einer geschlossenen Zugmittelbahn 22 angeordnet ist. Die Antriebseinrichtung 35 weist eine Antriebswelle 36 mit einem Antriebsmotor 37 auf, um den Zugmitteltrieb 20 auf der geschlossenen Zugmittelbahn 22 in Zugbahnrichtung Z anzutreiben. An der Antriebswelle 36 ist ein Zahnrad als Antriebsmittel 36a angeordnet, das in den Zugmitteltrieb 20 eingreift, um die erste Formeinheit 25a entlang der geschlossenen Zugmittelbahn 22 zu bewegen. Fig. 1 zeigt die erste Formeinheit 25a in deren Längsausstreckung von im Wesentlichen einem ersten Ende 13 der Basisstruktur bis zum weiteren Ende 14 der Basisstruktur, welche sich senkrecht zur Förderrichtung F der Fördereinrichtung erstreckt. Der Zugmitteltrieb 20 weist neben der ersten Formeinheit 25a auch weiter Formeinheiten 25b, 25c auf, wie nachfolgend in Fig. 2 oder Fig. 3 beschrieben.

Die Rohteigware kann beispielsweise als flache und längliche Endlos-Rohteigware am Fördermittel 45 angeordnet sein (nicht gezeigt). Die Rohteigware wird entlang der Förderstrecke 46 mit den Verformungswerkzeugen 27a in Kontakt gebracht. In diesem Bereich wird eine Kontaktstrecke 46a ausgebildet. Der Abstand zwischen dem Zugmitteltrieb 20 und dem Fördermittel 45 ist mithilfe der Verstelleinrichtung 38 einstellbar.

Die Vorrichtung 10 weist eine Reinigungseinrichtung 60 auf, mit welcher die mehreren Verformungswerkzeuge 27a von Rohteigresten und/oder Mehlrückständen reinigbar sind, wenn die mehreren Verformungswerkzeuge 27a hin zur Reinigungseinrichtung 60 angeordnet sind. Der Zugmitteltrieb 20 ist zwischen der Reinigungseinrichtung 60 und der Fördereinrichtung 40 angeordnet. Als Reinigungseinrichtung 60 ist eine drehbare Reinigungsbürste 61 vorgesehen. Die Reinigungsbürste 61 ist mit einer Reinigungsantriebswelle 62 verbunden, welche von einem Reinigungsantrieb 63 in Drehung versetzt wird. Die Reinigungsbürste 61 wird gedreht, wenn sich die mehreren Verformungswerkzeuge 27a an der Reinigungsbürste 61 vorbeibewegen. Die Rohteigreste und/oder Mehlrückstände werden von eine Auffangwanne 64 aufgefangen.

Fig. 3 zeigt im Detail den Zugmitteltrieb 20, der als Kettenantrieb mit einer Zugmittelkette 21 ausgebildet ist. Der Zugmitteltrieb 20 weist mehrere Formeinheiten 25a, 25b, 25c auch, welche jeweils mehrere Verformungsmatrizen 26 mit mehreren Verformungswerkzeugen 27a aufweisen, wobei die Verformungsmatrizen 26 entlang der Förderstrecke 46 der Fördereinrichtung 40 bewegbar sind. Die Formeinheiten 25a, 25b, 25c sind voneinander beabstandet und unabhängig voneinander an der Zugmittelkette 21 bewegbar gelagert. Die Formeinheiten 25a, 25b, 25c bewegen sich endlos entlang der geschlossenen Zugmittelbahn 22 und können die Rohteigware wiederkehrend aufbereiten.

Die Zugmittelbahn 22 weist im Wesentlichen drei Bahnsteigungen 23a, 23b, 23c auf, eine erste Bahnsteigungen 23a, eine zweite Bahnsteigungen 23b und eine dritte Bahnsteigungen 23c, in denen die mehreren Verformungswerkzeuge 27a jeweils zum Fördermittel 45 hin ausgerichtet sind. Dabei sind die Formeinheiten 25a, 25b, 25c in der zweite Bahnsteigung 23b derart ausgerichtet, dass diese parallel zum Fördermittel 45 ausgerichtet sind. Die mehreren Verformungswerkzeugen 27a der Verformungsmatrizen 26 verweilen dabei entlang der Kontaktstrecke 46a in der Rohteigware, wobei sich die mehreren Verformungswerkzeuge 27a und das Fördermittel 45 linear mit identischen Geschwindigkeiten bewegen. Am Ende der Kontaktstrecke 46 werden die mehreren Verformungswerkzeuge 27a von der Rohteigware entfernt und hinterlassen je nach Formgestaltung des Verformungswerkzeugs 27a mehrere Abdrücke in der Rohteigware (nicht gezeigt).

Die erste Bahnsteigung 23a weist eine negative Steigung auf und die dritte Bahnsteigung 23c weist eine positive Steigung auf. Die Formeinheiten 25a, 25b, 25c sind entlang der ersten Bahnsteigung 23a bewegbar, um die mehreren Verformungswerkzeuge 27a in die Rohteigware mit einem Eindringwinkel β einzuführen. Die Formeinheiten 25a, 25b, 25c mit den mehreren Verformungswerkzeugen 27a sind dabei zum Fördermittel 45 hin ausgerichtet, wobei die mehreren Verformungswerkzeuge 27a beim Bewegen entlang der ersten Bahnsteigung 23a weitgehend vom Fördermittel 45 beabstandet sind und erst am Ende der ersten Bahnsteigung 23a in die Rohteigware eindringen. Der Eindringwinkel β ist einstellbar und liegt zwischen 80° und 100°. Der Eindringwinkel β ist mithilfe einer ersten Einstelleinrichtung veränderbar, indem der Zugmitteltrieb 20, bzw. die Zugmittelkette 21, insbesondere im Bereich der erste Bahnsteigung 23a in einer verstellbaren Führungseinrichtung angeordnet ist bzw. geführt wird. Beispielsweise ist diese Führungseinrichtung in Langlöchern manuell oder maschinell verschiebbar.

Die Formeinheiten 25a, 25b, 25c sind entlang der dritten Bahnsteigung 23c bewegbar, um sich aus der Rohteigware in einem Austrittswinkel ϕ zu lösen. Die Formeinheiten 25a, 25b, 25c mit den mehreren Verformungswerkzeugen 27a sind dabei hin zum Fördermittel 45 ausgerichtet, wobei die mehreren Verformungswerkzeuge 27a beim Bewegen entlang der dritten Bahnsteigung 23c weitgehend vom Fördermittel 45 beabstandet sind und am Anfang der dritten Bahnsteigung 23c aus Rohteigware ausdringen. Der Austrittswinkel ϕ ist einstellbar und liegt zwischen 80° und 100°. Der Austrittswinkel ϕ ist mithilfe der ersten Einstelleinrichtung oder einer zweiten Einstelleinrichtung veränderbar, indem der Zugmitteltrieb 20, bzw. die Zugmittelkette 21, insbesondere im Bereich der dritten Bahnsteigung 23c in einer verstellbaren Führungseinrichtung angeordnet ist bzw. geführt wird. Beispielsweise ist diese Führungseinrichtung in Langlöchern manuell oder maschinell verschiebbar.

Die Fig. 4 bis 6 zeigen eine Verformungsmatrix 26 im Detail, welche an einer der Formeinheiten 25a, 25b, 25c an dem Zugmitteltrieb 20 angeordnet ist. Mehrere derartige Verformungsmatrizen 26 sind entlang der Längsausstreckung der Formeinheiten 25a, 25b, 25c angeordnet. An einer Verformungsmatrix 26 sind mehrere Verformungswerkzeuge 27a angeordnet. Die mehreren Verformungswerkzeuge 27a sind entlang einer ersten Linie 29a und entlang einer zweiten Linie 29b an der Verformungsmatrix 26 angeordnet, wobei die erste Linie 29a und die zweite Linie 29b senkrecht aufeinander stehen. Die mehreren Verformungswerkzeuge 27a weisen jeweils mehrere Noppen 28a zum abschnittsweisen Eindringen in die Rohteigware auf, welche eine Beschichtung aus Teflon aufweisen können.

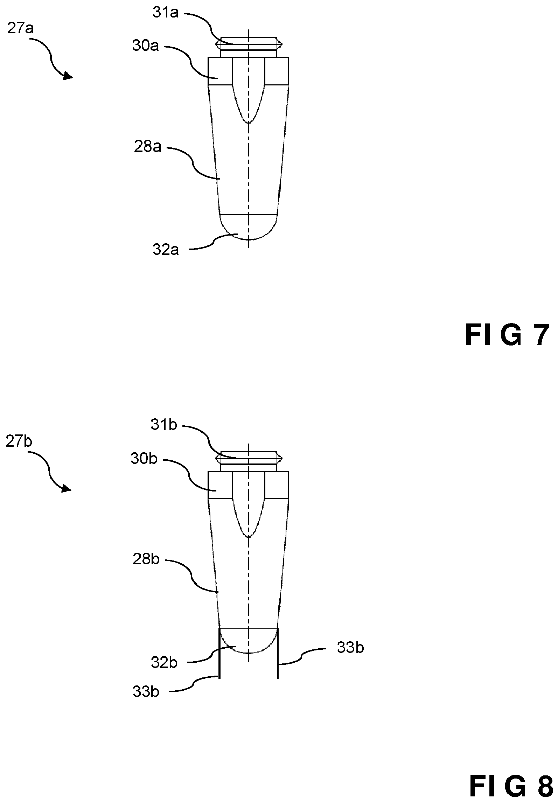

Fig. 7 zeigt ein erstes Verformungswerkzeug 27a mit den Noppen 28a, welche jeweils aus einem stiftförmigen Grundkörper 30a bestehen, der an einem ersten Ende einen Befestigungsabschnitt 31a zum Befestigen der Noppen 28a an der Verformungsmatrix 26 umfasst. Am gegenüberliegenden Ende der Noppen 28a weisen diese einen Verformungsabschnitt 32a zum zumindest bereichsweisen Eindringen in die Rohteigware auf. Der Verformungsabschnitt 32a der Noppen 28a ist halbkugelförmig ausgebildet.

Fig. 8 zeigt ein weiteres Verformungswerkzeug 27b mit den Noppen 28b, welche aus einem stiftförmigen Grundkörper 30b bestehen, der an einem ersten Ende einen Befestigungsabschnitt 31b zum Befestigen des Noppens 28b an der Verformungsmatrix 26 umfasst. Am gegenüberliegenden Ende des Noppens 28b weist dieser zumindest eine Schneidkante 33b zum vollständigen Eindringen in die Rohteigware auf. Die Schneidkante 33b dient als Trennwerkzeug, um zumindest einen Rohteigwarenteil von der übrigen Rohteigware zu trennen und einfach zu separieren. Die Schneidkante 33b ist am Verformungsabschnitt 32b des Noppens 27b angeordnet.

Mit der vorgenannten Vorrichtung kann das nachfolgend beschriebene Verfahren zum Aufbereiten einer Rohteigware ausgeführt werden, wobei das Verfahren die folgenden Verfahrensschritte umfasst (siehe Fig 1 bis 3):
a) Fördern des Fördermittels 45 einer Fördereinrichtung 40 entlang einer Förderstrecke 46;
b) Antreiben zumindest einer ersten Formeinheit 25a mit zumindest einer Verformungsmatrix 26 mit mehreren Verformungswerkzeuge 27a entlang einer geschlossenen Zugmittelbahn 22 mit zumindest zwei Bahnsteigungen 23a, 23b, in der die mehreren Verformungswerkzeuge 27a der zumindest einen Verformungsmatrix 26 zum Fördermittel 45 ausgerichtet ist;
c) Zumindest abschnittsweises Eindringen der mehreren Verformungswerkzeuge 27a in eine Rohteigware, wobei das abschnittsweise Eindringen in die Rohteigware entlang einer ersten Bahnsteigung 23a der geschlossenen Zugmittelbahn 22 erfolgt;
d) Eindringen von weitere mehrere Verformungswerkzeuge 27a einer weiteren Verformungsmatrix 26 einer zweiten Formeinheit 25b in die Rohteigware, wobei das Eindringen in die Rohteigware entlang der ersten Bahnsteigung 23a der geschlossenen Zugmittelbahn 22 erfolgt;
e) Bewegen der mehreren Verformungswerkzeuge 27a entlang eines ersten Bereiches der Förderstrecke 46 der Fördereinrichtung 40 mit einer zweiten Bahnsteigung 23b, wobei die Geschwindigkeit der mehreren Verformungswerkzeuge 27a identisch mit der Fördergeschwindigkeit F des Fördermittels 45 ist;
f) Lösen der mehreren Verformungswerkzeuge 27a der zumindest einen Verformungsmatrix 26 von der Rohteigware, wobei die mehreren Verformungswerkzeuge 27a entlang einer weiteren Bahnsteigung 23c bewegt werden;
g) Reinigen der mehreren Verformungswerkzeuge 27a mit einer Reinigungseinrichtung 60.

### Bezugszeichenliste

- 10: Vorrichtung
- 12: Basisstruktur von 10
- 13: ersten Ende von 12
- 14: weitere Ende von 12
- 20: Zugmitteltrieb
- 21: Zugmittelkette
- 22: Zugmittelbahn
- 23a: ersten Bahnsteigung
- 23b: zweite Bahnsteigungen
- 23c: dritte Bahnsteigung
- 25a: erste Formeinheit
- 25b: zweite Formeinheit
- 25c: dritte Formeinheit
- 26: Verformungsmatrizen
- 27a: Verformungswerkzeuge
- 27b: Verformungswerkzeuge
- 28a: Noppe
- 28b: Noppe
- 29a: ersten Linie
- 29b: zweiten Linie
- 30a: Grundkörper von 28a
- 30b: Grundkörper von 28b
- 31a: Befestigungsabschnitt von 28a
- 31b: Befestigungsabschnitt von 28b
- 32a: Verformungsabschnitt von 28a
- 32b: Verformungsabschnitt von 28b
- 33b: Schneidkanten
- 35: Antriebseinrichtung
- 36: Antriebswelle
- 36a: Antriebsmittel
- 37: Antriebsmotor
- 38: Verstelleinrichtung
- 40: Fördereinrichtung
- 45: Fördermittel
- 46: Förderstrecke
- 46a: Kontaktstrecke
- 50: Backeinrichtung
- 60: Reinigungseinrichtung
- 61: Reinigungsbürste
- 62: Reinigungsantriebswelle
- 63: Reinigungsantrieb
- 64: Auffangwanne
- F: Förderrichtung
- Z: Zugbahnrichtung
- β: Eindringwinkel
- ϕ: Austrittswinkel

## Patentansprüche

1. Vorrichtung (10) zum Aufbereiten einer Rohteigware, umfassend eine Fördereinrichtung (40) mit einem Fördermittel (45) zum Fördern der Rohteigware entlang einer Förderstrecke (46) in Richtung zu einer Backeinrichtung (50),
einen Zugmitteltrieb (20) mit einer ersten Formeinheit (25a; 25b; 25c) zum Verformen der Rohteigware, wobei der Zugmitteltrieb (20) beabstandet von der Fördereinrichtung (40) und benachbart zu der Fördereinrichtung (40) angeordnet ist,
der Zugmitteltrieb (20) eine Antriebseinrichtung (35) zum Antreiben der ersten Formeinheit (25a; 25b; 25c) entlang einer geschlossenen Zugmittelbahn (22) aufweist,
die erste Formeinheit (25a; 25b; 25c) zumindest eine Verformungsmatrix (26) mit mehreren Verformungswerkzeugen (27a; 27b) aufweist, und
die zumindest eine Verformungsmatrix (26) bereichsweise entlang der Förderstrecke (46) der Fördereinrichtung (40) bewegbar ist.

2. Vorrichtung nach Anspruch 1, **dadurch gekennzeichnet, dass** der Zugmitteltrieb (20) ein Kettenantrieb oder ein Riemenantrieb ist, und bevorzugt die mehreren Verformungswerkzeuge (27a; 27b) und das Fördermittel (45) linear mit identischen Geschwindigkeiten bewegbar sind.

3. Vorrichtung nach Anspruch 1 oder 2, **dadurch gekennzeichnet, dass** der Zugmitteltrieb (20) die geschlossene Zugmittelbahn (22) bildet, wobei vorteilhaft diese Zugmittelbahn (22) zumindest eine erste Bahnsteigung (23a) und eine zweite Bahnsteigung (23b) aufweist, in denen die mehreren Verformungswerkzeugen (27a; 27b) der zumindest einen Verformungsmatrix (26) jeweils zum Fördermittel (45) ausgerichtet sind, wobei die erste Formeinheit (25a; 25b; 25c) bevorzugt zumindest zeitweise entlang der ersten Bahnsteigung (23a) bewegbar ist, um die mehreren Verformungswerkzeuge (27a; 27b) in die Rohteigware mit einem Eindringwinkel (β) einzuführen und der Eindringwinkel (β) insbesondere zwischen 80° und 100° liegt, vorteilhaft 90° beträgt.

4. Vorrichtung nach Anspruch 3, **dadurch gekennzeichnet, dass** die erste Formeinheit (25a; 25b; 25c) zumindest zeitweise entlang der zweiten Bahnsteigung (23b) bewegbar ist, um in der Rohteigware entlang der Förderstrecke (46) der Fördereinrichtung (40) zu verweilen.

5. Vorrichtung nach Anspruch 3 oder 4, **dadurch gekennzeichnet, dass** die Zugmittelbahn (22) eine weitere Bahnsteigung (23c) aufweist, in der die mehreren Verformungswerkzeuge (27a; 27b) der zumindest einen Verformungsmatrix (26) zum Fördermittel (45) ausgerichtet ist, wobei die erste Formeinheit (25a; 25b; 25c) zumindest zeitweise entlang der weiteren Bahnsteigung (23c) bewegbar ist, um die mehreren Verformungswerkzeuge (27a; 27b) aus der Rohteigware in einem Austrittswinkel (ϕ) zu lösen und der Austrittswinkel (ϕ) insbesondere zwischen 80° und 100° liegt, vorteilhaft 90° beträgt.

6. Vorrichtung nach einem der Ansprüche 1 bis 5, **dadurch gekennzeichnet, dass** die mehreren Verformungswerkzeuge (27a; 27b) entlang einer ersten Linie (29a) und entlang einer zweiten Linie (29b) an der zumindest einen Verformungsmatrix (26) angeordnet sind, wobei die erste Linie (29a) und die zweite Linie (29b) senkrecht aufeinander stehen.

7. Vorrichtung nach einem der Ansprüche 1 bis 6, **dadurch gekennzeichnet, dass** die mehreren Verformungswerkzeuge (27a; 27b) jeweils zumindest eine Noppe (28a; 28b) zum abschnittsweisen Eindringen in die Rohteigware aufweisen.

8. Vorrichtung nach einem der Ansprüche 1 bis 7, **dadurch gekennzeichnet, dass** die mehreren Verformungswerkzeuge (27a; 27b) jeweils zumindest eine Schneidkante (33b) zum vollständigen Eindringen in die Rohteigware aufweisen.

9. Vorrichtung nach einem der Ansprüche 1 bis 8, **dadurch gekennzeichnet, dass** die mehreren Verformungswerkzeuge (27a; 27b) eine Beschichtung aufweisen, um die Haftreibung zur Rohteigware zu senken, wobei die Beschichtung vorteilhaft Teflon umfasst.

10. Vorrichtung nach einem der Ansprüche 1 bis 9, **dadurch gekennzeichnet, dass** die erste Formeinheit (25a; 25b; 25c) mehrere Verformungsmatrizen (26) ausweist und der Zugmitteltrieb (20) bevorzugt zumindest eine zweite Formeinheit (25a; 25b; 25c) aufweist, wobei die erste Formeinheit (25a; 25b; 25c) von der zweiten Formeinheit (25a; 25b; 25c) beabstandet ist.

11. Verfahren zum Aufbereiten einer Rohteigware, insbesondere mit einer Vorrichtung nach einem der Ansprüche 1 bis 10, umfassend die Verfahrensschritte:
a) Fördern des Fördermittels einer Fördereinrichtung entlang einer Förderstrecke;
b) Antreiben zumindest einer ersten Formeinheit mit zumindest einer Verformungsmatrix mit mehreren Verformungswerkzeuge entlang einer geschlossenen Zugmittelbahn mit zumindest zwei Bahnsteigungen, in der die mehreren Verformungswerkzeuge der zumindest einen Verformungsmatrix zum Fördermittel ausgerichtet ist;
c) Zumindest abschnittsweises Eindringen der mehreren Verformungswerkzeuge in eine Rohteigware, wobei das abschnittsweise Eindringen in die Rohteigware entlang einer ersten Bahnsteigung der geschlossenen Zugmittelbahn erfolgt;
d) Bewegen der mehreren Verformungswerkzeuge entlang eines ersten Bereiches der Förderstrecke der Fördereinrichtung mit einer zweiten Bahnsteigung, wobei die Geschwindigkeit der mehreren Verformungswerkzeuge identisch mit der Fördergeschwindigkeit des Fördermittels ist.

12. Verfahren nach Anspruch 11, **dadurch gekennzeichnet, dass** die mehreren Verformungswerkzeuge der zumindest einen Verformungsmatrix nach dem Schritt d) von der Rohteigware gelöst werden, wobei die mehreren Verformungswerkzeuge entlang einer weiteren Bahnsteigung bewegt werden.

13. Verfahren nach Anspruch 11 oder 12, **dadurch gekennzeichnet, dass** nach dem Schritt c) weitere mehrere Verformungswerkzeuge einer weiteren Verformungsmatrix eine zweiten Formeinheit zumindest abschnittsweises in die Rohteigware eindringen, wobei das abschnittsweise Eindringen in die Rohteigware entlang der ersten Bahnsteigung der geschlossenen Zugmittelbahn erfolgt.

14. Verfahren nach Anspruch 12 oder 13 **dadurch gekennzeichnet, dass** die mehreren Verformungswerkzeuge mit einer Reinigungseinrichtung gereinigt werden.
